Europäisches Patentamt

European Patent Office

Office européen des brevets

(11) Publication number: **0 293 268**
A1

# (12) EUROPEAN PATENT APPLICATION

(21) Application number: **88304927.2**

(22) Date of filing: **31.05.88**

(51) Int. Cl.⁴: **B 23 B 25/06**
B 23 Q 17/22, G 01 B 21/02

(30) Priority: **29.05.87 GB 8712723**

(43) Date of publication of application:
**30.11.88 Bulletin 88/48**

(84) Designated Contracting States:
**BE CH DE ES FR GB IT LI SE**

(71) Applicant: **ANILAM ELECTRONICS EUROPE LIMITED**
**46 Potters Lane Kiln Farm**
**Milton Keynes, MK11 3HQ (GB)**

(72) Inventor: **Perry, Marshall Charles**
**16 Tynedale Road**
**Loughborough, LE11 3TA (GB)**

(74) Representative: **Newell, William Joseph et al**
**D. Young & Co., 10 Staple Inn**
**London WC1V 7RD (GB)**

(54) Machine tool incorporating a transducer.

(57) A machine tool, e.g. a lathe, is modified to include in an enclosed area the scale (22) and reading head (20) of a linear transducer.

FIG.7

**Description**

## MACHINE TOOL INCORPORATING A TRANSDUCER

This invention relates to a machine tool incorporating a transducer for measuring movement of a movable member relative to a support member.

In machine tools such as lathes it is essential that the operator be able to measure accurately the displacement of a cutting tool from a present datum. Lathes normally include a bed running parallel to the centreline of the chuck and a saddle mounted for sliding movement with respect to the bed. The saddle includes a support surface which supports a cross-slide for movement about an axis perpendicular to the centreline of the chuck by means of a dovetail sliding joint. The cross-slide supports a top slide which is slidably mounted for movement along a perpendicular axis with respect to the cross-slide. The top slide supports the tool holder which holds the cutting tool. In general, the fine adjustments of the cutting tool during a machine operation are effected by maintaining the saddle stationary and effecting movement of the cross-slide and the top slide by means of turning associated handwheels. Each handwheel incorporates a scale to allow the position of the machine tool to be determined by reading off the appropriate values from the scales on the cross-slide and the top slide.

To assist an operator it is known to provide a linear transducer which is bolted on to an existing lathe. The transducer comprises a scale having a fringe pattern and an optical reading head which outputs a signal which, after suitable processing, identifies accurately the position of the reading head relative to the scale. Examples of such transducers are the Anilam "Wizard" range of digital readout transducers manufactured by the Applicant. The scale is usually attached to the part of the lathe which is relatively fixed (e.g. the saddle) and the reading head is attached to the relatively movable part, e.g. the cross-slide. The attachment of these components to the lathe requires precise alignment, and the transducer includes internal guides, such as rails to guide the reading head as it moves along the scale. Because of the harsh environment in which the transducer is to operate, it is necessary to protect the transducer against the ingress of cutting oil, swarf etc. and for this purpose a special sealing arrangement is necessary.

It is understood that as many as 85% of lathes installed in factories today incorporate a bolt-on transducer, but only 5% of these lathes leave the lathe manufacturer with the transducer fitted. Thus 80% of transducers are fitted to lathes by the end user or by a party other than the lathe manufacturer. The applicants suggest that this is due partly to the fact that bolt-on transducers are not sufficiently protected against damage, both in transit and use, because both parts of the transducer are exposed. In transit, the lathe will be lifted by straps and these may snag the components of the transducer. Similarly, during use, the tools or workpieces may be dropped into the transducer components or the components may be otherwise disturbed thus leading to inaccurate measurement or failure.

The arrangement illustrated herein avoids many of these disadvantages and furthermore allows a lathe to be equipped with a linear transducer at a cost which is reduced by as much as 75% compared to the cost of fitting a bolt-on transducer.

According to one aspect of this invention there is provided a machine tool comprising a supporting member having two spaced parallel guide regions, a sliding member having two spaced parallel guide regions for slidably engaging the respective guide regions of the supporting member, said slidable member and said supporting member including respective opposed generally parallel intermediate surface regions disposed between the respective guide regions, and a transducer for sensing relative movement of said supporting member and said sliding member, said transducer including a scale for association with one of said supporting and said sliding members and a reading head for association with the other thereof characterised in that each of said intermediate surface regions includes a recess and said scale is at least partially received in one of said recesses and said reading head is at least partially received in the other recess.

Further aspects of the invention will be apparent from the following description of a non-limiting example, reference being made to the accompanying drawings, in which:-

Figure 1 is a front view of a typical centre lathe;

Figure 2 is an enlarged front view of the saddle assembly of the lathe of Figure 1;

Figure 3 is a view on arrow 'A' of Figure 2;

Figure 4 is a top view of the reading head and the scale of the transducer incorporated in the lathe of Figures 1 to 3;

Figure 5 is a side view on the reading head and scale of Figure 4;

Figure 6 is a view of the reading face of the reading head;

Figure 7 is a section view through the saddle and cross-slide of the lathe of Figure 1 showing the relative positions of the reading head and the scale of the transducer when installed, and

Figure 8 is a detail view of the cross-slide of the lathe of Figure 1 showing the pocket in which the reading head is installed.

The centre lathe illustrated in the Figures includes a bed 10, a saddle 12 mounted for sliding movement on the bed 10 in a linear direction, a cross-slide 14 mounted by means of a sliding dovetail fit on the saddle for movement in a perpendicular direction, a top slide 16 mounted on the cross-slide and a tool holder 18 secured to the top slide. Movement of the tool holder 18 in two perpendicular directions may be effected manually and/or by means of a drive motor.

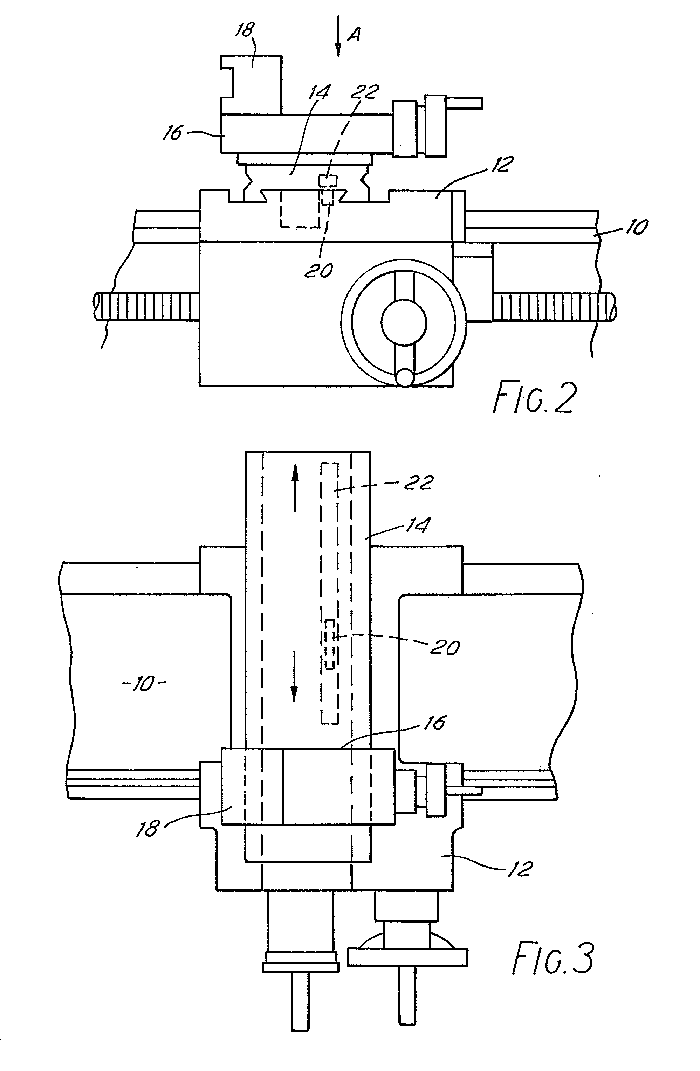

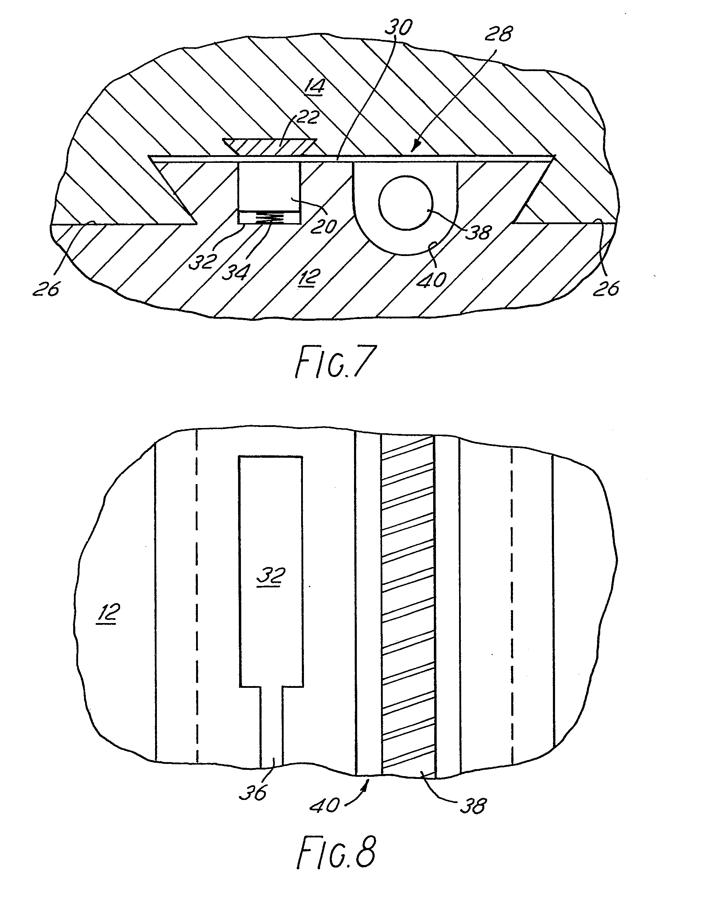

Referring now to Figures 2 and 3, the centre lathe has been modified to include a reading head 20 and a scale 22 of an optical transducer attached to the saddle 12 and the cross-slide 14 respectively. The transducer makes use of the Moire or Vernier effect whereby the scale and the reading head include respective fringes at a different pitch. Relative movement of the reading head and the scale causes modulation of the optical output which is processed to count the pulses therein to determine the extent of the relative movement. The reading head, scale and associated processor and display are similar in principle of operation to the Anilam "Quantum" range of digital readout equipment manufactured by the Applicants. In the present example, however, the casing, wiper seals and guide rails of the transducer are not employed.

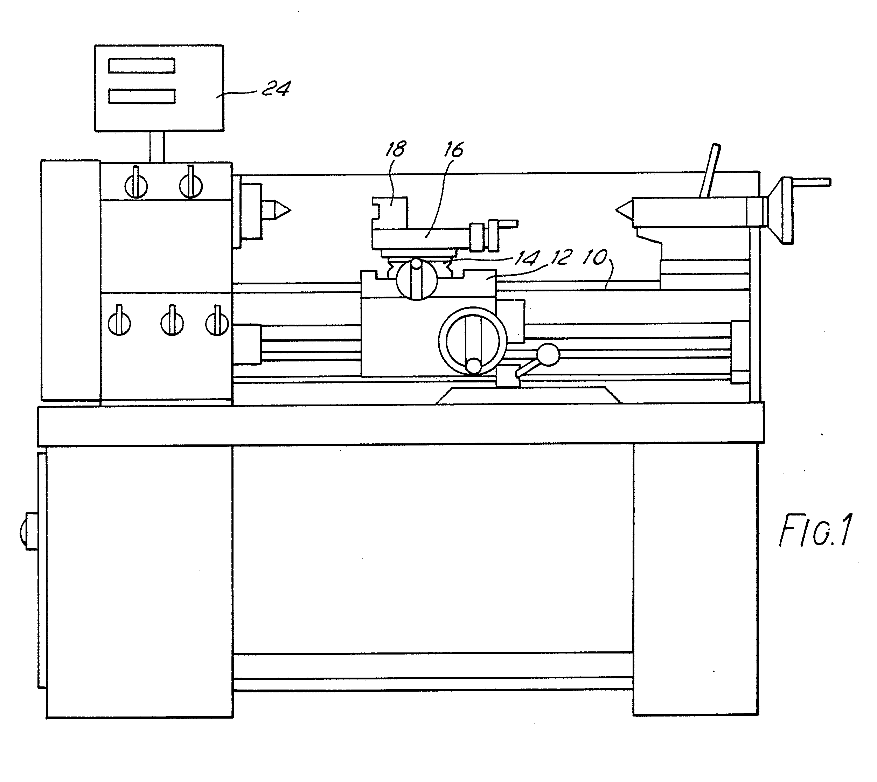

The output from the reading head is supplied to a processor and display unit 24 above the gearbox of the lathe (Figure 1).

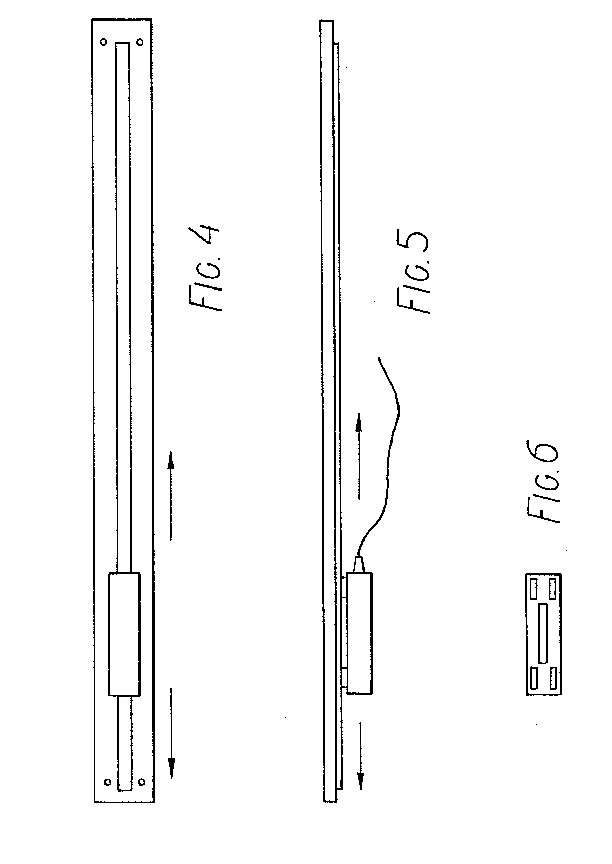

Referring now to Figures 7 and 8, the saddle includes two elongate machined guide surfaces 26 provided one to either side of an elongate dovetail tenon 28 which together serve to define an accurate sliding joint for constraining the cross-slide to move in a precise linear direction. On the upper surface 30 of the tenon 28 (between the guide surfaces 26) there is provided a rectangular recess 32 sized to receive the reading head 20 on a sliding fit. The recess is deeper than the reading head 20 and includes a compression spring 34 in the bottom thereof to urge the reading head 20 upwardly into contact with the scale 22. As seen in Figures 4 and 6, the upper surface of the reading head includes a window 34 having a fringe pattern on its inner surface and four P.T.F.E. pads 36 which prevent the window rubbing against the scale. A channel 36 leads from the rectangular recess 32 to the edge of the saddle for the reading head cable to pass out of the saddle. Also visible in Figures 7 and 8 is the lead screw 38 and associated channel 40 which transmits movement to the cross-slide 14.

The lower surface of the cross-slide 14 includes a recess of generally complementary shape to the tenon 28 except that there is a small gap 38 between the upper horizontal surface of the tenon and the opposing surface region of the cross-slide. This feature is common to most lathes. Opposite the reading head 20 is provided the scale 22. The scale 22 is of dovetail section and is slid into and fixed in a complementarily shaped recess in the cross-slide.

In use, as the cross-slide is moved relative to the saddle, the reading head outputs a signal to the processor and display unit 24 so that the movement is displayed to the lathe operator. The operator can reset the display to zero at a particular position so as to provide a datum for further movement.

Whilst the machine tool described above is a lathe and the transducer measures movement of the cross-slide relative to the saddle, it will be understood that the transducer arrangement may be used in other machine tools and may be used to determine the relative movement of components other than the saddle and the cross-slide. Foe example a further arrangement may be used to measure the movement of the top slide relative to the cross-slide.

There are many advantages associated with the arrangement disclosed above compared to the bolt-on assembly. The assembly is protected from cuttings, swarf and coolant during machining operations. By mounting the transducer as close as possible to the machine slides it minimises the machine tool errors as opposed to a transducer that is positioned externally which is subject to machine tool errors. When the lathe is manufactured, accurate machine surfaces can be prepared for the location of the two elements of the transducer to give correct location and mounting as opposed to external bolt-on bracketry which has to be individually aligned. Damage to a transducer during any machining operation of the lathe is avoided. The transducer is protected during shipping and installation by virtue of being encased within the lathe. As the two transducer elements are mounted on pre-machined surfaces, each element can be removed easily for cleaning, inspection or replacement. By in-building, the cost of supplying additional protection to the two elements of the transducer is superfluous. Also, because the arrangement enables the transducer to be factory-fitted it ensures that the manufacturer can control fitting of the transducer components.

**Claims**

1. A machine tool comprising a supporting member (12) having two spaced parallel guide regions (26), a sliding member (14) having two spaced parallel guide regions for slidably engaging respective guide regions of the supporting member, said slidable member and said supporting member including respective opposed generally parallel intermediate surface regions (30) disposed between the respective guide regions, and a transducer (20; 22) for sensing relative movement of said supporting member and said sliding member, said transducer including a scale (22) for association with one of said supporting and said sliding members and a reading head (20) for association with the other thereof characterised in that each of said intermediate surface regions includes a recess and said scale is at least partially received in one of said recesses and said reading head is at least partially received in the other recess.

2. A machine tool according to claim 1, wherein said supporting member is the saddle (12) of a lathe and the sliding member is a cross-slide (14).

3. A machine tool according to claim 1 or claim 2, wherein the scale (22) is of strip-like form and is substantially flush with the surrounding intermediate surface region, and said reading head (20) is spring-biased into sliding contact with said scale.

4. A machine tool according to any of the preceding claims wherein said scale (22) is provided on the member which in use is

uppermost.

16·06·68

0293268

Fig.1

14 12 10

18 16

24

FIG.2

FIG.3

FIG.7

FIG.8

16·06·88
0293266

FIG.4

FIG.5

FIG.6

## DOCUMENTS CONSIDERED TO BE RELEVANT

EP 88304927.2

| Category | Citation of document with indication, where appropriate, of relevant passages | Relevant to claim | CLASSIFICATION OF THE APPLICATION (Int. Cl.4) |
|---|---|---|---|
| Y | DE - A - 1 945 017 (INDEX-WERKE) | 1,3 | B 23 B 25/06 |
| A | * Fig.; page 2, lines 16-22; page 9, lines 4-9 * | 2 | B 23 Q 17/22 |
| | -- | | G 01 B 21/02 |
| Y | US - A - 2 536 706 (TURRETTINI) | 1 | |
| A | * Totality * | 4 | |
| | -- | | |
| Y | AT - B - 382 965 (HEIDENHAIN) | 1,3 | |
| A | * Claims * | 4 | |
| | -- | | |
| A | DE - A - 1 477 833 (OERLIKON) | | |
| | -- | | |
| A | DE - A1 - 3 501 281 (AURKI) | | |
| | -- | | |
| A | GB - A - 1 240 276 (MONFORTS) | | |
| | -- | | |
| A | DE - C - 831 347 (BOEHRINGER) | | |
| | ---- | | |

| TECHNICAL FIELDS SEARCHED (Int. Cl.4) |
|---|
| B 23 B 25/00 |
| B 23 Q 17/00 |
| G 01 B 21/00 |

The present search report has been drawn up for all claims

| Place of search | Date of completion of the search | Examiner |
|---|---|---|
| VIENNA | 17-08-1988 | LIDL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82